# EUROPEAN PATENT SPECIFICATION

(11) **EP 0 339 744 B1**
(45) Date of publication and mention of the grant of the patent: **22.12.1993**
(21) Application number: 89201066.1
(22) Date of filing: 25.04.1989
(51) Int. Cl.: C08G 67/02, B01J 31/24, B01J 31/00

(54) **Process for the preparation of polymers of carbon monoxide with unsatured compounds**
Verfahren zur Herstellung von Polymeren aus Kohlenmonoxyd mit ungesättigten Verbindungen
Procédé de préparation de polymères du monoxyde de carbone avec des composés insaturés

(30) Priority: 29.04.1988 NL 8801123
(43) Date of publication of application: 02.11.1989
(73) Proprietor: SHELL INTERNATIONALE RESEARCH MAATSCHAPPIJ B.V., 2596 HR Den Haag (NL)
(72) Inventor: Rosenbrand, Gerrit Gerardus, NL-1031 CM Amsterdam (NL); Salter, James Arthur, NL-1031 CM Amsterdam (NL)

(56) References cited:
- EP-A- 0 246 674
- EP-A- 0 248 483
- US-A- 4 143 096

## Description

The invention relates to a process for the preparation of polymers of carbon monoxide with one or more olefinically unsaturated compounds.

High molecular weight linear polymers of carbon monoxide with one or more olefinically unsaturated compounds (for the sake of brevity referred to as A), in which on the one hand the monomer units -(CO)- and on the other hand the units -A′- originating in the applied monomers A occur in alternating order, can be prepared by contacting the monomers with a solution of a catalyst composition in a diluent in which the polymers are insoluble or virtually insoluble and which catalyst composition is based upon
a) a palladium compound,
b) an anion of an acid with a pKa of less than 2, and
c) a diphosphine of the general formula R¹R²P-R-PR³R⁴, wherein R¹, R², R³ and R⁴ represent similar or different optionally polar-substituted hydrocarbyl groups and R represents a bivalent bridging group containing at least two carbon atoms in the bridge.

During polymerization, the polymers are obtained in the form of a suspension in the diluent. Thus far, the preparation of the polymers was carried out mainly batchwise. Batch preparation is carried out by introducing catalyst into a reactor which contains diluent and monomers and is at the desired temperature and pressure. As polymerization proceeds, the pressure drops, the concentration of the polymers in the diluent increases and the viscosity of the suspension rises. As a rule, polymerization is continued until the viscosity of the suspension has reached such a high value that continuing the process further would create difficulties, for instance in connection with heat removal. During batchwise polymer preparation, not only the temperature but also the pressure can optionally be kept constant, by adding monomers to the reactor during polymerization. As a rule, polymerization is terminated by cooling the reaction mixture to room temperature and releasing the pressure. Subsequently, the polymer suspension is withdrawn from the reactor and the reactor is flushed with diluent.

In the polymer preparation described hereinbefore, reactor fouling poses a problem. During polymerization, part of the polymers formed are deposited on the reactor parts that are situated below the liquid level, such as the reactor wall, the baffle plates, the stirrer shaft, the stirrer blades, the cooling and heating coils and the plunger tubes. When the polymer suspension is withdrawn from the reactor, these deposited polymers remain behind in the reactor and they cannot be removed by flushing the reactor with diluent. In some cases, this reactor fouling may assume exorbitant dimensions; in extreme cases it may reach values of up to about 40%, which means that only about 60% of the prepared polymer will leave the reactor in the form of a suspension whereas about 40% will remain behind as a deposit on the reactor parts. The application of the polymerization on a technical scale may be severely hampered by this phenomenon.

During further research done by the Applicant into this subject, another measure has now been found to control reactor fouling, which measure can be applied per se or in combination with the afore-described measure of suspending a solid matter in the diluent. The measure now found is associated with the fact that, on account of the various properties that they impart to the catalyst compositions in which they are incorporated, the acids with a pKa of less than 2, from which the anions are eligible to be used as components b) in the present catalyst compositions, can be divided into two classes, which for the sake of brevity will be referred to hereinafter as class 1 and class 2. Class 1 includes all the halogen monocarboxylic acids with a pKa of less than 2. An example of an acid belonging to class 1 is trifluoroacetic acid. Class 2 includes all the acids with a pKa of less than 2 in so far as these are not halogen monocarboxylic acids. An example of an acid belonging to class 2 is para-toluenesulphonic acid.

Comparison of the behaviours of catalyst compositions comprising an acid belonging to class 1 as component b) with those of corresponding catalyst compositions comprising an acid belonging to class 2 as component b) shows that when similar reaction temperatures are used for preparing polymers of acceptable molecular weights, the acid should be present in the former catalyst compositions in a concentration of at least about 7 equivalents per mol of palladium, whilst in the latter catalyst compositions, an acid concentration of at least about 1 equivalent per mol palladium will suffice for the purpose. The degree of reactor fouling encountered is the same when using acids belonging to class 1 and when using acids belonging to class 2 in the concentrations mentioned above. Surprisingly, however, it was found that when acids belonging to class 1 are used in concentrations of less than 6 equivalents per mol of palladium, the reactor fouling encountered is considerably less than when these acids are used in concentrations of at least 7 equivalents per mol of palladium. It was further found that when after the polymer concentration has reached a value of at least 0.2 g per 100 g of polymer suspension, the acid concentration is increased either by adding an acid belonging to class 1 in such a quantity that the overall concentration of acid belonging to class 1 is at least 7 equivalents per mol of palladium or by adding an acid belonging to class 2 in a quantity of at least 1 equivalent per mol of palladium, the said reduction in reactor fouling is not lost.

The present patent application therefore relates to a process for the preparation of polymers, in which process a mixture of carbon monoxide with one or more olefinically unsaturated compounds is polymerized by contacting the mixture at elevated temperature and pressure with a solution of a catalyst compositon in a diluent in which the polymers form a suspension and which catalyst composition is based upon
a) a palladium compound,
b) an acid with a pKa of less than 2, and
c) a diphosphine of the general formula R¹R²P-R-PR³R⁴, wherein R¹-R⁴ represent the same or different optionally polar-substituted hydrocarbyl groups and R is a bivalent organic bridging group containing at least two carbon atoms in the bridge,
in which process the catalyst composition that is used at the outset of polymerization comprises a halogen monocarboxylic acid as component b) in a concentration of from 2 to 6 equivalents per mol of palladium and during which polymerization the acid concentration of the polymerization mixture is increased after the polymer concentration has reached a value of at least 0.2 g per 100 g of polymer suspension, the latter increase being effected either by adding a halogen monocarboxylic acid having a pKa of less than 2 in such a quantity that the overall concentration of halogen monocarboxylic acid is at least 7 equivalents per mol of palladium or by adding an acid having a pKa of less than 2 other than a halogen monocarboxylic acid in a quantity of at least 1 equivalent per mol of palladium.

In the process of the invention, a catalyst composition is used at the outset of polymerization which comprises a halogen monocarboxylic acid as component b), in a concentration of from 2 to 6 equivalents per mol of palladium. Preferably, the halogen monocarboxylic acid concentration in this catalyst composition is less than 5 equivalents per mol of palladium and in particular 2-4 equivalents per mol of palladium. Examples of suitable halogen monocarboxylic acids with a pKa of less than 2 that are eligible for use as components b) in the catalyst compositions are trifluoroacetic acid, trichloroacetic acid, difluoroacetic acid and dichloroacetic acid. Preference is given to the use of trifluoroacetic acid. After the polymer concentration has reached a value of at least 0.2 g per 100 g of polymer suspension, the acid concentration of the polymerization mixture is raised. It is preferred to wait with increasing the acid concentration of the polymerization mixture until the polymer concentration has reached a value of at least 0.5 g per 100 g of polymer suspension. Either a halogen monocarboxylic acid having a pKa of less than 2 or an other acid having a pKa of less than 2 may be used to increase the acid concentration of the polymerization mixture. If a halogen monocarboxylic acid is chosen to increase the acid concentration of the polymerization mixture, it is preferred to use the same halogen monocarboxylic acid as was present in the catalyst composition at the outset of polymerization. The quantity of halogen monocarboxylic acid added should be such that the overall concentration of halogen monocarboxylic acid is at least 7 equivalents per mol of palladium. When a halogen monocarboxylic acid is used to increase the acid concentration of the polymerization mixture, such a quantity thereof is preferably used that the overall concentration of halogen monocarboxylic acid is 7.5-30 equivalents per mol of palladium and in particular 10-25 equivalents per mol of palladium. In the process of the invention, an other acid with a pKa of less then 2 may also be used to increase the acid concentration of the polymerization mixture. Examples of suitable acids of the polymerization mixture. Examples of suitable acids of this type are para-toluenesulphonic acid, sulphuric acid, perchloric acid and 2-hydroxypropane-2-sulphonic acid. If this type of acid is chosen to increase the acid concentration of the polymerization mixture, para-toluenesulphonic acid is preferred. When an acid other than a halogen monocarboxylic acid is used to increase the acid concentration of the polymerization mixture, this other acid should be added in a quantity of at least 1 equivalent per mol of palladium. Preferably, this other acid is added in a quantity of 1.25-3 equivalents per mol of palladium and in particular in a quantity of 1.5-2.5 equivalents per mol of palladium.

In the process of the invention, the acid concentration of the polymerization mixture is increased during polymerization. In order to maintain a better check on the initial phases of the polymerization process, the catalyst concentration may also be increased during polymerization, if desired. To this end, part of the overall amount of palladium compound to be used and a proportional part of the overall amount of diphosphine to be used, together with a quantity of halogen monocarboxylic acid of less than 6 equivalents per mol of palladium, may be introduced into the reactor at the outset of polymerization, while the remainder of the palladium compound and of the diphosphine, together with the desired amount of halogen monocarboxylic acid or other acid is added after the polymer concentration has reached a value of at least 0.2 g per 100 g of polymer suspension.

The palladium compound employed in the catalyst composition as component a) is preferably a palladium salt of a carboxylic acid, and palladium acetate in particular. In the diphosphines of the general formula R¹R²P-R-PR³R⁴ that can suitably be used as component c) in the catalyst compositions, the groups R¹, R², R³ and R⁴ preferably represent optionally polar-substituted aryl groups and in particular optionally polar-substituted phenyl groups. As polar substituents that may occur in the groups R¹, R², R³ and R⁴, may be mentioned, inter alia, alkoxy groups, such as methoxy groups, dialkyl-amino groups, such as dimethyl-amino groups and thioalkyl groups, such as thiomethyl groups. The diphosphines preferably used in the catalyst compositions are diphosphines in which the groups R¹, R², R³ and R⁴ are aryl groups each containing one or more polar substituents. Further, preference is given to such diphosphines in which, per aryl group, at least one of these polar substituents occupies a position ortho in respect to the phosphorus atom to which the aryl group involved is bound. Finally, preference is given to diphosphines in which the groups R¹, R², R³ and R⁴ are similar to one another, as well as to diphosphines in which the polar substituents which may optionally occur in the groups R¹, R², R³ and R⁴ are alkoxy groups, and methoxy groups in particular. As regards the bridging groups R present in the diphosphines, preference is given to bridging groups containing three atoms in the bridge, at least two of which are carbon atoms. Examples of suitable bridging groups R are the -CH₂-CH₂-CH₂- group, the -CH₂-C(CH₃)₂-CH₂- group and the -CH₂-Si(CH₃)₂-CH₂-group. Diphosphines that can be very suitably used as components c) in the catalyst compositions are 1,3-bis[di(2-methoxyphenyl)phosphino]propane, 1,3-bis[di(2,4-dimethoxyphenyl)phosphino]propane, 1,3-bis[di(2,6-dimethoxyphenyl)phosphino]propane, and 1,3-bis[di(2,4,6-trimethoxyphenyl)phosphino]propane.

Special preference is given to the use of catalyst compositions comprising 1,3-bis[di(2-methoxyphenyl)phosphino]propane as component c). Preferably, the diphosphines are used in the catalyst compositions in a quantity of 0.5-2 and in particular of 0.75-1.5 mol per mol of palladium.

In order to enhance the activity of the present catalyst compositions, it is preferred to incorporate a 1,4-quinone as component d). For this purpose, 1,4-benzoquinones and 1,4-naphthoquinones have been found to be very suitable. The quantity of 1,4-quinone used is preferably 10-1000 mol and in particular 25-250 mol per mol of palladium.

The polymerization of the invention is carried out in a diluent in which the polymers are insoluble or virtually insoluble. Both single diluents and compound diluents are suitable diluents. Examples of single diluents are lower aliphatic alcohols, such as methanol and ethanol. Examples of compound diluents are mixtures of lower aliphatic alcohols and lower aliphatic ketones, such as mixtures of methanol with acetone or with methyl ethyl ketone. In the present polymerization, a lower aliphatic alcohol, and in particular methanol, is preferred as diluent.

Olefinically unsaturated compounds that can be suitably polymerized with carbon monoxide according to the invention are compounds consisting exclusively of carbon and hydrogen as well as compounds which, in addition to carbon and hydrogen, contain one or more hetero-atoms. The process of the invention is preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1, as well as styrene and alkyl-substituted styrenes, such as p-methyl styrene and p-ethyl styrene. The process of the invention is in particular very suitable for application in the preparation of copolymers of carbon monoxide with ethene and for the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized preferably contains 10⁻⁷-10⁻³ and in particular 10⁻⁶-10⁻⁴ mol of palladium.

The preparation of the polymers is preferably carried out at a temperature of 40-120°C and a pressure of 20-150 bar and in particular at a temperature of 50-100°C and a pressure of 30-100 bar. The molar ratio of olefinically unsaturated compounds relative to carbon monoxide in the mixture to be polymerized is preferably 10:1-1:5 and in particular 5:1-1:2.

The invention will now be illustrated with the aid of the following examples.

### Example 1

A carbon monoxide/ethene/propene terpolymer was prepared as follows. A stirred autoclave with a capacity of 100 l was charged with 45 kg of methanol and 3.5 kg of propene. After the contents of the autoclave were brought to 75°C, a 1:1 carbon monoxide/ethene mixture was blown in until a pressure of 45 bar was reached. Subsequently, a catalyst solution was introduced into the autoclave which comprised
100 ml methanol,
100 ml toluene,
0.75 mmol palladium acetate,
15 mmol trifluoroacetic acid, and
0.90 mmol 1,3-bis[di(2-methoxyphenyl)phosphino]propane.

During polymerization, the pressure was kept at 45 bar by the introduction of a 1:1 carbon monoxide/ethene mixture. Polymerization was terminated after 47 hours by cooling the reaction mixture to room temperature and releasing the pressure. After the polymer suspension had been withdrawn through an opening in the bottom of the autoclave, the autoclave was flushed with 45 l of methanol in order to remove polymer that had remained behind. The methanol suspensions were combined and filtered. The terpolymer was washed with methanol and dried at 50°C. The yield was 5.2 kg of terpolymer with an LVN(60) of 1.88 dl/g, a bulk density of 290 kg/m³ and a melting point of 228°C. Inspection of the inside surface of the autoclave showed that a considerable portion of the prepared terpolymer had been deposited on the walls, the baffle plates and the stirrer. This terpolymer was removed from the autoclave by mechanical means, washed with methanol and dried at 50°C. Its quantity was 1.5 kg. Thus, in this experiment, reactor fouling amounted to

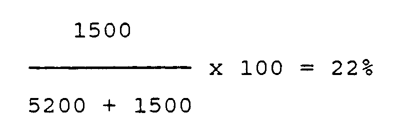

### Example 2

A carbon monoxide/ethene/propene terpolymer was prepared substantially in the same way as the terpolymer of Example 1, but with the following differences
a) the catalyst solution used comprised
   100 ml methanol,
   100 ml toluene,
   0.375 mmol palladium acetate,
   7.5 mmol trifluoroacetic acid, and
   0.45 mmol 1,3-bis[di(2-methoxyphenyl)phosphino]propane, and
b) the reaction time was 44 hours instead of 47 hours.

The yield was a polymer suspension comprising 4.5 kg of terpolymer with an LVN(60) of 2.28 dl/g, a bulk density of 65 kg/m³ and a melting point of 230°C. 0.7 kg of terpolymer had remained behind in the autoclave; thus, in this case, reactor fouling amounted to 13.5%.

### Example 3

A carbon monoxide/ethene/propene terpolymer was prepared substantially in the same way as the terpolymer of Example 1, but with the following differences
a) the catalyst solution comprised 3 mmol instead of 15 mmol of trifluoroacetic acid,
b) at the moment when the polymer concentration had reached a value of 0.7 g per 100 g of polymer suspension, a solution of 12 mmol of trifluoroacetic acid in 50 ml of methanol was added to the autoclave, and
c) the reaction time was 26 hours instead of 47 hours.

The yield was a polymer suspension comprising 2.4 kg of terpolymer with an LVN(60) of 2.22 dl/g and a melting point of 226°C. 100 g of terpolymer had remained behind in the autoclave; thus, in this case, reactor fouling amounted to 4%.

### Example 4

A carbon monoxide/ethene/propene terpolymer was prepared substantially in the same way as the terpolymer of Example 2, but with the following differences
a) the catalyst solution comprised 0.75 mmol instead of 7.5 mmol of trifluoroacetic acid,
b) at the moment when the polymer concentration had reached a value of 0.8 g per 100 g of polymer suspension, a solution of 6.75 mmol of trifluoroacetic acid in 50 ml of methanol was added to the autoclave, and
c) the reaction time was 47 hours instead of 44 hours.

The yield was a polymer suspension comprising 5.5 kg of terpolymer with an LVN(60) of 2.04 dl/g and a melting point of 230°C. 50 g of terpolymer had remained behind in the autoclave; thus, in this case, reactor fouling amounted to 0.9%.

### Example 5

A carbon monoxide/ethene/propene terpolymer was prepared substantially in the same way as the terpolymer of Example 1, but with the following differences
a) the catalyst solution used comprised
   100 ml methanol,
   100 ml toluene,
   0.188 mmol palladium acetate,
   0.375 mmol trifluoroacetic acid, and
   0.225 mmol 1,3-bis[di(2-methoxyphenyl)phosphino]propane,
b) at the moment when the polymer concentration had reached a value of 0.6 g per 100 g of polymer suspension, a catalyst solution comprising
   100 ml methanol,
   100 ml toluene,
   0.562 mmol palladium acetate,
   14.625 mmol trifluoroacetic acid, and
   0.675 mmol 1,3-bis[di(2-methoxyphenyl)phosphino]-propane,
   was added to the autoclave, and
c) the reaction time was 22 hours instead of 47 hours.

The yield was a polymer suspension comprising 3.6 kg of terpolymer with an LVN(60) of 2.03 dl/g and a melting point of 222°C. 80 g of terpolymer had remained behind in the autoclave; thus, in this case, reactor fouling amounted to 2.2%.

### Example 6

A carbon monoxide/ethene/propene terpolymer was prepared substantially in the same way as the terpolymer of Example 1, but with the following differences
a) in addition, 50 g of a carbon monoxide/ethene/propene terpolymer was suspended in the autoclave,
b) the catalyst solution comprised 3 mmol instead of 15 mmol of trifluoroacetic acid,
c) at the moment when the polymer concentration had reached a value of 0.3 g per 100 g of polymer suspension, a solution of 12 mmol of trifluoroacetic acid in 50 ml of methanol was added to the autoclave, and
d) the reaction time was 30 hours instead of 47 hours.

The suspended terpolymer had an LVN(60) of 2.1 dl/g, an average particle size of 10⁻⁴ m, a bulk density of 50 kg/m³ and a melting point of 229°C.

The yield was a polymer suspension comprising 8.2 kg of terpolymer. 50 g of terpolymer had remained behind in the autoclave; thus, in this case, reactor fouling amounted to 0.7%.

Of Examples 1-6, Examples 3-6 are examples in accordance with the invention. In these examples, terpolymers of carbon monoxide with ethene and propene were prepared by using a catalyst composition containing trifluoroacetic acid as component b), with the acid/palladium ratio being increased during polymerization. In Example 5, the catalyst concentration was also increased during polymerization. In Example 6, a solid matter was suspended in the diluent before the monomers were contacted with the catalyst solution. Examples 1 and 2 fall outside the scope of the invention. They have been included in the patent application for comparison.

As regards the molecular weights of the prepared polymers, the following may be observed. According as the polymers have higher average molecular weights, their intrinsic viscosities too will as a rule be higher. In order to determine the intrinsic viscosity of the present polymer, four solutions are first of all prepared by dissolving the polymer in meta-cresol, at four different concentrations. Then the viscosity at 60 °C of each of these solutions relative to that of meta-cresol at 60 °C is determined in a viscometer. When Tₒ represents the efflux time of meta-cresol and Tₚ the efflux time of the polymer solution, the relative viscosity (ηᵣₑₗ) is determined by 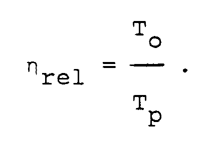
The inherent viscosity (ηᵢₙₕ) can be calculated from ηᵣₑₗ, according to the formula: 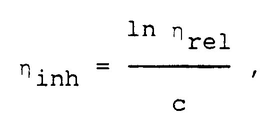
wherein c represents the polymer concentration as grams per 100 ml of solution. Plotting of the ηᵢₙₕ found for each of the four polymer solutions against the corresponding concentration (c) and subsequent extrapolation to c=0 leads to the intrinsic viscosity [η] as dl/g, which in the examples of the present patent application has been referred to not as 'intrinsic viscosity', but by the designation recommended by the IUPAC of 'Limiting Viscosity Number' (LVN). Generally, in the process of the invention, polymers are prepared which have LVN(60)'s varying from about 1 to 5. Such LVN's correspond with average molecular weights of about 15,000 to 150,000.

With the aid of ¹³C-NMR analysis it was established that the carbon monoxide/ethene/propene terpolymers prepared in accordance with Examples 1-6 had a linear structure and consisted of units of the formula -(CO)-(C₂H₄)- and units of the formula -(CO)-(C₃H₆)-, which units occurred randomly distributed within the terpolymers.

## Claims

1. Process for the preparation of polymers, wherein a mixture of carbon monoxide with one or more olefinically unsaturated compounds is polymerized by contacting the mixture at an elevated temperature and pressure with a solution of a catalyst composition in a diluent in which the polymers form a suspension, and which catalyst composition is based upon
a) a palladium compound,
b) an acid with a pKa of less than 2, and
c) a diphosphine of the general formula R¹R²P-R-PR³R⁴, wherein R¹-R⁴ represent the same or different optionally polar-substituted hydrocarbyl groups and R is a bivalent organic bridging group containing at least two carbon atoms in the bridge,
in which process the catalyst composition that is used at the outset of polymerization comprises a halogen monocarboxylic acid as component b) in a concentration of from 2 to 6 equivalents per mol of palladium, characterized in that during the polymerization the acid concentration of the polymerization mixture is increased after the polymer concentration has reached a value of at least 0.2 g per 100 g of polymer suspension, the latter increase being effected either by adding a halogen monocarboxylic acid having a pKa of less than 2 in such a quantity that the overall concentration of halogen monocarboxylic acid is at least 7 equivalents per mol of palladium or by adding an acid having a pKa of less than 2 other than a halogen monocarboxylic acid in a quantity of at least 1 equivalent per mol of palladium.

2. A process as claimed in claim 1, characterized in that the catalyst composition used at the outset of polymerization contains trifluoroacetic acid as the halogen monocarboxylic acid.

3. A process as claimed in claim 1 or 2, characterized in that the acid concentration of the polymerization mixture is increased during polymerization after the polymer concentration has reached a value of at least 0.5 g per 100 g of polymer suspension.

4. A process as claimed in one or more of claims 1-3, characterized in that the acid concentration of the polymerization mixture is increased by the addition of a halogen monocarboxylic acid having a pKa of less than 2 in such a quantity that the overall concentration of halogen monocarboxylic acid is 7.5-30 equivalents per mol of palladium.

5. A process as claimed in one or more of claims 1-3, characterized in that the acid concentration of the polymerization mixture is increased by the addition of an acid having a pKa of less than 2 other than halogen monocarboxylic acid, in a quantity of 1.25-3 equivalents per mol of palladium.

6. A process as claimed in claim 5, characterized in that the acid concentration of the polymerization mixture is increased by the addition of para-toluenesulphonic acid.

7. A process as claimed in one or more of claims 1-6, characterized in that part of the overall amount of palladium compound to be used and a proportional part of the overall amount of diphosphine to be used, together with a quantity of halogen monocarboxylic acid of from 2 to 6 equivalents per mol of palladium, are introduced into the reactor at the outset of polymerization, while the remainder of the palladium compound and of the diphosphine, together with the required amount of halogen monocarboxylic acid or other acid, is added after the polymer concentration has reached a value of at least 0.2 g per 100 g of polymer suspension.

8. A process as claimed in one or more of claims 1-7, characterized in that it is carried out at a temperature of 50-100°C, a pressure of 30-100 bar and a molar ratio in the mixture to be polymerized, of the olefinically unsaturated compounds relative to carbon monoxide, of 5:1-1:2, and in that per mol of olefinically unsaturated compound to be polymerized, such a quantity of catalyst composition is used as to contain 10⁻⁶-10⁻⁴ mol of palladium.

## Patentansprüche

1. Verfahren zur Herstellung von Polymeren, in welchem eine Mischung von Kohlenmonoxid mit einer oder mehreren olefinisch ungesättigten Verbindung(en) durch Kontaktieren der Mischung bei erhöhter Temperatur und erhöhtem Druck mit einer Lösung einer Katalysatorzusammensetzung in einem Verdünnungsmittel polymerisiert wird, in welchem die Polymere eine Suspension bilden, und welche Katalysatorzusammensetzung auf
a) einer Palladiumverbindung,
b) einer Säure mit einem pKa-Wert von weniger als 2, und
c) einem Diphosphin der allgemeinen Formel R¹R²P-R-PR³R⁴, in welcher R¹-R⁴ gleiche oder verschiedene ,gegebenenfalls polarsubstituierte Kohlenwasserstoffgruppen darstellen und R eine zweiwertige organische Brückengruppe mit mindestens zwei Kohlenstoffatomen in der Brücke ist,
basiert,
in welchem Verfahren die eingesetzte Katalysatorzusammensetzung am Beginn der Polymerisation eine Halogenmonocarbonsäure als Komponente b) in einer Konzentration von 2 bis 6 Äquivalenten je Mol Palladium enthält, dadurch gekennzeichnet, daß während der Polymerisation die Säurekonzentration der Polymerisationsmischung erhöht wird, nachdem die Polymerkonzentration einen Wert von mindestens 0,2 g je 100 g Polymersuspension erreicht hat, wobei die zuletzt genannte Erhöhung entweder durch Zugabe einer Halogenmonocarbonsäure mit einem pKa-Wert von weniger als 2 in einer solchen Menge, daß die Gesamtkonzentration an Halogenmonocarbonsäure mindestens 7 Äquivalente je Mol Palladium beträgt, oder durch Zugabe einer Säure mit einem pKa-Wert von weniger als 2, die keine Halogenmonocarbonsäure ist, in einer Menge von mindestens 1 Äquivalent je Mol Palladium bewirkt wird.

2. Ein Verfahren, wie in Anspruch 1 beansprucht, dadurch gekennzeichnet , daß die eingesetzte Katalysatorzusammensetzung am Beginn der Polymerisation Trifluoressigsäure als Halogenmonocarbonsäure enthält.

3. Ein Verfahren, wie in Anspruch 1 oder 2 beansprucht, dadurch gekennzeichnet, daß die Säurekonzentration der Polymerisationsmischung während der Polymerisation erhöht wird, nachdem die Polymerkonzentration einen Wert von mindestens 0,5 g je 100 g Polymersuspension erreicht hat.

4. Ein Verfahren, wie in einem oder mehreren der Ansprüche 1 bis 3 beansprucht, dadurch gekennzeichnet, daß die Säurekonzentration der Polymerisationsmischung durch Zugabe einer Halogenmonocarbonsäure mit einem pKa-Wert von weniger als 2 in einer solchen Menge, daß die Gesamtkonzentration der Halogenmonocarbonsäure 7,5 is 30 Äquivalente je Mol Palladium beträgt, erhöht wird.

5. Ein Verfahren, wie in einem oder mehreren der Ansprüche 1 bis 3 beansprucht, dadurch gekennzeichnet, daß die Säurekonzentration der Polymerisationsmischung durch Zugabe einer Säure mit einem pKa-Wert von weniger als 2, die keine Halogenmonocarbonsäure ist, in einer Menge von 1,25 bis 3 Äquivalenten je Mol Palladium erhöht wird.

6. Ein Verfahren, wie in Anspruch 5 beansprucht, dadurch gekennzeichnet, daß die Säurekonzentration der Polymerisationsmischung durch Zugabe von para-Toluolsulfonsäure erhöht wird.

7. Ein Verfahren, wie in einem oder mehreren der Ansprüche 1 bis 6 beansprucht, dadurch gekennzeichnet, daß ein Teil der Gesamtmenge der einzusetzenden Palladiumverbindung und eine Anteilsmenge der Gesamtmenge an einzusetzendem Diphosphin zusammen mit einer Menge an Halogenmonocarbonsäure von 2 bis 6 Äquivalenten je Mol Palladium in den Reaktor am Beginn der Polymerisation eingespeist werden, während der restliche Anteil der Palladiumverbindung und des Diphosphins zusammen mit der erforderlichen Menge an Halogenmonocarbonsäure oder einer anderen Säure zugegeben wird, nachdem die Polymerkonzentration einen Wert von mindestens 0,2 g je 100 g Polymersuspension erreicht hat.

8. Ein Verfahren, wie in einem oder mehreren der Ansprüche 1 bis 7 beansprucht, dadurch gekennzeichnet, daß es bei einer Temperatur von 50 bis 100°C, einem Druck von 30 bis 100 bar und einem Molverhältnis in der zu polymerisierenden Mischung an den olefinisch ungesättigten Verbindungen in bezug auf das Kohlenmonoxid von 5:1 bis 1:2 durchgeführt wird, und daß je Mol olefinisch ungesättigter zu polymerisierender Verbindung eine solche Menge einer Katalysatorzusammensetzung eingesetzt wird, daß darin 10⁻⁶ bis 10⁻⁴ Mol Palladium enthalten sind.

## Revendications

1. Procédé pour la préparation de polymères, dans lequel un mélange d'oxyde de carbone avec un ou plusieurs composés oléfiniquement insaturés est polymérisé par mise en contact du mélange à température et pression élevées avec une- solution d'une composition catalytique dans un diluant dans lequel les polymères forment une suspension, la composition catalytique étant à base de
a) un composé du palladium,
b) un acide d'un pKa de moins de 2, et
c) une diphosphine de la formule générale
R¹R²P-R-PR³R⁴, où R¹-R⁴ représentent des groupes hydrocarbyle identiques ou différents portant éventuellement des substituants polaires et R est un groupe organique bivalent formant pont contenant au moins deux atomes de carbone dans le pont,
procédé dans lequel la composition catalytique qui est utilisée au début de la polymérisation comprend un acide monocarboxylique halogéné comme constituant b) à une concentration comprise entre 2 et 6 équivalents par mole de palladium, le procédé étant caractérisé en ce que durant la polymérisation la concentration en acide du mélange de polymérisation est accrue après que la concentration des polymères a atteint une valeur d'au moins 0,2 g par 100 g de suspension de polymères, cet accroissement étant effectué soit par addition d'un acide monocarboxylique halogéné ayant un pKa de moins de 2 en quantité telle que la concentration totale en acide monocarboxylique halogéné soit d'au moins 7 équivalents par mole de palladium, soit par addition d'un acide ayant un pKa de moins de 2 autre qu'un acide monocarboxylique halogéné à raison d'au moins 1 équivalent par mole de palladium.

2. Un procédé selon la revendication 1, caractérisé en ce que la composition catalytique utilisée au début de la polymérisation contient de l'acide trifluoroacétique comme acide monocarboxylique halogéné.

3. Un procédé selon la revendication 1 ou 2, caractérisé en ce que la concentration en acide du mélange de polymérisation est accrue durant la polymérisation après que la concentration des polymères a atteint une valeur d'au moins 0,5 g par 100 g de suspension de polymères.

4. Un procédé selon une ou plusieurs des revendications 1-3, caractérisé en ce que la concentration en acide du mélange de polymérisation est accrue par l'addition d'un acide monocarboxylique halogéné ayant un pKa de moins de 2 en quantité telle que la concentration totale en acide monocarboxylique halogéné soit de 7,5-30 équivalents par mole de palladium.

5. Un procédé selon une ou plusieurs des revendications 1-3, caractérisé en ce que la concentration en acide du mélange de polymérisation est accrue par l'addition d'un acide ayant un pKa de moins de 2 autre qu'un acide monocarboxylique halogéné, à raison de 1,25-3 équivalents par mole de palladium.

6. Un procédé selon la revendication 3, caractérisé en ce que la concentration en acide du mélange de polymérisation est accrue par l'addition d'acide para-toluènesulfonique.

7. Un procédé selon une ou plusieurs des revendications 1-4, caractérisé en ce qu'une partie de la quantité totale de composé du palladium à utiliser et une partie proportionnelle de la quantité totale de diphosphine à utiliser, en même temps qu'une quantité d'acide monocarboxylique halogéné comprise entre 2 et 6 équivalents par mole de palladium, sont introduites dans le réacteur du début de la polymérisation, tandis que le reste du composé du palladium et de la diphosphine, en même temps que la quantité nécessaire d'acide monocarboxylique halogéné ou d'un autre acide, est ajouté après que la concentration des polymères a atteint une valeur d'au moins 0,2 g par 100 g de suspension de polymères.

8. Un procédé selon une ou plusieurs des revendications 1-7, caractérisé en ce qu'il est mis en oeuvre à une température de 50-100°C, une pression de 10-30 bars et un rapport molaire des composés oléfiniquement insaturés à l'oxyde de carbone dans le mélange à polymériser compris entre 5:1 et 1:2, et en ce que, par mole de composé oléfiniquement insaturé à polymériser, on utilise une quantité de composition catalytique telle qu'elle contienne 10⁻⁶-10⁻⁴ mole de palladium.
